(19) Europäisches Patentamt
European Patent Office
Office européen des brevets

(11) **EP 3 804 956 A1**

(12) **EUROPÄISCHE PATENTANMELDUNG**

(43) Veröffentlichungstag:
**14.04.2021 Patentblatt 2021/15**

(21) Anmeldenummer: **20197991.1**

(22) Anmeldetag: **24.09.2020**

(51) Int Cl.:
**B29C 48/92** (2019.01)    **B29C 48/37** (2019.01)
**B29C 48/375** (2019.01)    B29B 7/42 (2006.01)
B29B 7/72 (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.10.2019   DE 102019127042**

(71) Anmelder: **REHAU AG + Co**
**95111 Rehau (DE)**

(72) Erfinder: **Ernstberger, Theodor**
**95111 Rehau (DE)**

(54) **VERFAHREN ZUR ÜBERWACHUNG VON VERSCHLEISS- UND/ODER VERSCHMUTZUNGSERSCHEINUNGEN IN EINER KUNSTSTOFF-EXTRUSIONSANLAGE**

(57)    Die Erfindung betrifft ein Verfahren zur Überwachung von Verschleiß- und/oder Verschmutzungserscheinungen in einer Kunststoff-Extrusionsanlage (100), wobei die Kunststoff-Extrusionsanlage (100) ein Extruderschneckengehäuse (1), mindestens eine im Extruderschneckengehäuse (1) axial drehbar gelagerte und motorisch angetriebene Extruderschnecke (3) zum Aufschmelzen und Fördern von Kunststoffgranulat (4), mindestens ein stromab der Extruderschnecke (3) angeordnetes Extrusionswerkzeug (5) sowie optional mindestens eine Schmelzepumpe (6) zur Förderung von Kunststoffschmelze aufweist. Erfindungsgemäß wird die Drehzahl ($N_1$) der Extruderschnecke (3) und/oder die Drehzahl ($N_2$) der Schmelzepumpe (6) sowie der Kunststoffaustragsstrom (M) aus dem Extrusionswerkzeug (1) fortlaufend gemessen, wobei mithilfe der Messwerte ein Quotient (Q) gebildet wird, in dessen Dividend mindestens eine Drehzahl ($N_1$, $N_2$) und in dessen Divisor der Kunststoffaustragsstrom (M) einfließt, und wobei bei ein- oder mehrfachem Überschreiten eines vordefinierten Grenzwertes für den Quotienten (Q) ein Alarm ausgelöst wird.

**Fig.1**

EP 3 804 956 A1

**Beschreibung**

Die Erfindung betrifft ein Verfahren zur Überwachung von Verschleiß- und/oder Verschmutzungserscheinungen in einer Kunststoff-Extrusionsanlage,

- wobei die Kunststoff-Extrusionsanlage ein Extruderschneckengehäuse, mindestens eine im Extruderschneckengehäuse axial drehbar gelagerte und motorisch angetriebene Extruderschnecke zum Aufschmelzen und Fördern von Kunststoffgranulat, mindestens ein stromab der Extruderschnecke angeordnetes Extrusionswerkzeug sowie optional mindestens eine Schmelzepumpe zur Förderung von Kunststoffschmelze aufweist.

Im Stand der Technik werden die Extruderschnecke und das zugehörige Gehäuse in der Regel durch regelmäßiges Vermessen überwacht. Dies erfordert eine Produktionsunterbrechung, ein sauberes Spülen der Maschine sowie den Einsatz von Industriemechanikern über mehrere Stunden. Folglich verursacht dies einen Verlust an Produktionszeit und einen hohen Personalaufwand. Beläge auf Schnecken, die zu Leistungsverlusten führen bzw. deren Ablösung, welche Oberflächenbeeinträchtigungen verursachen, werden somit regelmäßig erst im Rahmen der vorstehend geschilderten Produktionsunterbrechung erkannt.

Je nach herzustellendem Extrusionsprodukt wird mit Drücken von z.B. 10 bis zu 1500 bar und Temperaturen von beispielsweise 60 bis 300 °C gearbeitet. Die Länge der Extruderschnecke beträgt in der Regel das 25- bis 40-fache des Schneckendurchmessers. Insbesondere Einschneckenextruder sind ggf. als sogenannte Schnellläufer ausgebildet und werden mit Drehzahlen von bis zu 1500 Umdrehungen pro Minute betrieben. Die optionale Schmelzepumpe ist in der Regel eine Zahnradpumpe mit Drehzahlen von bis zu 4000 U/min. Die Drehzahl der Schnecke kann je nach Produktherstellung (z.B. schnelle Extrusion mit hoher Drehzahl bei der Herstellung von Extrusionsprofilen mit einfacher Geometrie, bspw. Kantenbändern oder Schläuchen, langsame Extrusion mit niedriger Drehzahl bei der Herstellung komplexer Geometrien, wie z.B. Fensterprofilen mit einer Vielzahl von Hohlkammern) oder auch Rezeptur des zu verarbeitenden Kunststoffgranulats unterschiedlich eingestellt sein, Gleiches gilt entsprechend für die Drehzahl der Schmelzepumpe. Insbesondere bei einer häufigen Änderung der Betriebsparameter fällt somit ein schleichender Verschleiß bzw. eine schleichende Verschmutzung in der Anlage nicht, bzw. nicht ohne Weiteres auf.

Vor diesem Hintergrund liegt der Erfindung die Aufgabe zugrunde, ein Verfahren mit den eingangs beschriebenen Merkmalen anzugeben, welches Verschleiß- und/oder Verschmutzungserscheinungen während des Betriebs der Kunststoff-Extrusionsanlage und damit ohne Produktionsunterbrechung erkennt.

Erfindungsgemäß wird zur automatisierten Überwachung von Verschleiß- und/oder Verschmutzungserscheinungen in der Kunststoff-Extrusionsanlage die Drehzahl der Extruderschnecke und/oder die Drehzahl der Schmelzepumpe sowie der Kunststoffaustragsstrom aus dem Extrusionswerkzeug fortlaufend (d.h. kontinuierlich, also quasi permanent oder in - z.B. regelmäßigen - Zeitabständen) gemessen, dass mithilfe der Messwerte ein Quotient Q

$$Q = f(N) / f(M)$$

gebildet wird, in dessen Dividend mindestens eine Drehzahl N und in dessen Divisor der Kunststoffaustragsstrom M einfließt, und dass bei ein- oder mehrfachem Überschreiten eines vordefinierten Grenzwertes für den Quotienten ein Alarm ausgelöst wird. Bei einer Alarmauslösung erst nach mehrfacher Überschreitung des Grenzwertes kann z.B. eine Intervallbildung vorgenommen werden derart, dass der Alarm erst dann ausgelöst wird, wenn ein über einen bestimmten Zeitraum (z.B. mindestens 1 h, mindestens 1 Tag, mindestens 1 Woche oder mindestens 1 Monat) ermittelter Mittelwert des Quotienten den Grenzwert überschreitet. Hierdurch wird ein unerwünschtes Auslösen des Alarms aufgrund betriebsbedingter Schwankungen des Messwerte vermieden. Das Überschreiten des Grenzwertes indiziert einen zu hohen Verschleiß- und/oder Verschmutzungsgrad der Kunststoff-Extrusionsanlage, so dass ein Service erforderlich ist, z.B. in Form einer Reinigung der Anlage und/oder dem Austausch bzw. der Instandsetzung der Verschleißteile. Der Vorteil der erfindungsgemäßen Lehre besteht insbesondere darin, dass auch bei sich ändernden Betriebsparametern der Anlage aufgrund unterschiedlicher Produktionsanforderungen (s. oben) ein schleichender Verschleiß bzw. eine schleichende Verschmutzung in der Anlage automatisch detektiert und durch den Alarm angezeigt wird. Im Rahmen der Erfindung liegt es ferner, dass in die Bildung des Quotienten Q zusätzlich mindestens ein Materialkennwert des zu gerade verarbeitenden Kunststoff-Materials einfließt, um zum Beispiel unterschiedliche Material-Zähigkeiten berücksichtigen zu können (bspw. die Viskosität des Kunststoff-Materials bei einer bestimmten Temperatur).

Erfindungsgemäß werden in der Kunststoff-Extrusionsanlage fortlaufend Produktionsparameter gemessen und digital abgespeichert. So ist beispielsweise bei der Verarbeitung von Polypropylen-Materialien, die in der Regel mit einer Schmelzepumpe erfolgt, die Drehzahl der Schmelzepumpe ein wichtiger Messwert. Gleiches gilt grundsätzlich auch für die Schneckendrehzahl. Im Rahmen einer Ausführungsform der Erfindung kann der Dividend des Quotienten als variable Größe lediglich die Drehzahl der Extruderschnecke $N = N_1$ oder die Drehzahl $N = N_2$ der Schmelzepumpe enthalten, insbesondere besteht der Dividend aus lediglich einer der beiden Drehzahlen $N_1$ oder $N_2$. Alternativ hierzu ist es jedoch auch möglich, dass in den Dividend des Quotienten sowohl die Drehzahl $N_1$ der Extruderschnecke als auch die Drehzahl der Schmelzepumpe $N_2$ als variable Größen einfließen. Dies kann insbesondere derart erfolgen, dass der Dividend des Quotienten das Produkt aus Drehzahl der Extruderschnecke und Drehzahl der Schmelzepumpe enthält ($N_1$ x $N_2$), insbesondere aus diesem Produkt besteht. Grundsätzlich sind jedoch andere Rechenoperationen zur Bildung des Dividends, z.B. eine Addition der beiden Drehzahlen ($N_1$ + $N_2$) und/oder die Addition einer Konstanten zu einer oder der Summe bzw. dem Produkt beider Drehzahlen, hierdurch nicht ausgeschlossen.

Vorzugsweise wird der Kunststoffaustragsstrom M in Form des Massenaustrags an Kunststoff aus dem Extrusionswerkzeug pro Zeiteinheit gemessen, was der Extrusionsgeschwindigkeit multipliziert mit der Masse des erzeugten Extrusionsprofils pro Meter entspricht. Die optional vorgesehene Schmelzepumpe ist zweckmäßigerweise zwischen dem Extruderschneckengehäuse und dem Extrusionswerkzeug angeordnet.

Der als Indikator für einen zu hohen Verschleißgrad von z.B. Extruderschnecke oder -gehäuse dienende, vordefinierte Grenzwert wird vorzugsweise mit Hilfe der/s verschleiß- und/oder verschmutzungsfreien Extruderschnecke und/oder Extruderschneckengehäuses und/oder Schmelzepumpe ermittelt. So kann bspw. ein entspr. Quotient mit Hilfe einer oder beider Drehzahlen sowie dem Kunststoffaustragsstrom im einwandfreien Zustand der Kunststoff-Extrusionsanlage ermittelt und zu diesem Wert beispielsweise ein Zuschlag in Form eines Faktors (z.B. 10 % oder 20 %) hinzugerechnet werden, um den Grenzwert zu ermitteln. Zweckmäßigerweise wird der Alarm in einer Instandhaltungszentrale einer Fabrik mit mehreren Kunststoff-Extrusionsanlagen ausgelöst.

Die Drehzahl der Extruderschnecke und/oder auch der Schmelzepumpe kann aus einer Reihe von gemittelten Drehzahl-Einzelmesswerten ermittelt werden. Durch diese Mittelung wird vermieden, dass kurzzeitige „Ausreißerwerte" nach unten oder oben, die betriebsbedingt nicht ausgeschlossen werden können, zu einer verfrühten Alarmauslösung führen. Alternativ oder auch kombiniert mit der vorbeschriebenen Maßnahme liegt es im Rahmen der Erfindung, dass - wie bereits beschrieben - eine Alarmauslösung erst dann erfolgt, wenn der vordefinierte Grenzwert fortlaufend mehrfach überschritten wird, auch hierdurch eine unerwünschte Alarmauslösung durch z.B. lediglich kurzzeitige Störungen im Betrieb verhindert. Zweckmäßigerweise erfolgt die Quotientenbildung, der Vergleich des ermittelten Quotienten mit dem vordefinierten Grenzwert sowie die Alarmauslösung mithilfe eines Computers, insbesondere eines Computer-Netzwerks, über das die Kunststoff-Extrusionsanlage mit einer davon entfernten Einrichtung, bspw. der vorgenannten Instandhaltungszentrale verbunden ist.

Als zu extrudierendes Material kann beispielsweise Polypropylen-Kunststoffgranulat verwendet werden, wobei andere Materialien wie z.B. PVC, PE, PMMA oder PVC hierdurch jedoch nicht ausgeschlossen sind.

Im Folgenden wird die Erfindung anhand einer lediglich ein Ausführungsbeispiel darstellenden Zeichnung ausführlich erläutert:

Fig. 1     eine shchematische Darstellung einer Kunstsoff-Extrusionsanlage, bei der das erfindungsgemäße Verfahren angewandt wird une

Fig. 2     eine weiteres Ausführungsbeispiel, bei dem die erfindungsgemße Lehre angewandt wird.

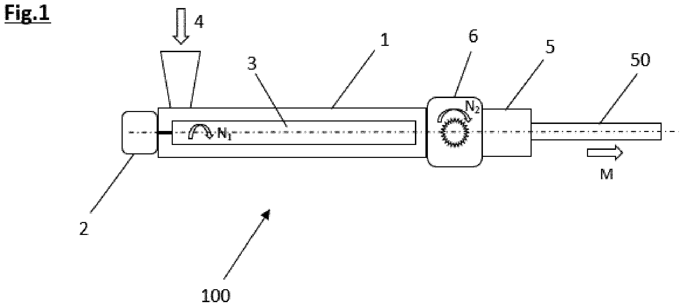

Die Figuren zeigen schematisch ein erfindungsgemäßes Verfahren zur automatisierten Überwachung von Verschleiß- und/oder Verschmutzungserscheinungen in einer Kunststoff-Extrusionsanlage 100. Gemäß Fig. 1 weist die Kunststoff-Extrusionsanlage 100 ein Extruderschneckengehäuse 1, eine einzelne im Extruderschneckengehäuse 1 axial drehbar gelagerte und über ein (nicht dargestelltes) Getriebe von einem Elektromotor 2 angetriebene Extruderschnecke 3 zum Aufschmelzen und Fördern von Kunststoffgranulat 4, ein stromab der Extruderschnecke 3 angeordnetes Extrusionswerkzeug 5 sowie eine Schmelzepumpe 6 zur Förderung von Kunststoffschmelze auf. Die Schmelzepumpe 6 ist optional vorgesehen, um den Durchsatz der Kunststoffschmelze durch das Werkzeug 5 zu vergleichmäßigen (Pulsationseffekte der Extruderschnecke 3 werden z.B. kompensiert) und damit den Prozess insgesamt zu stabilisieren. Die Schmelzepumpe 6 ist zwischen dem Extruderschneckengehäuse 1 und dem Werkzeug 5 angeordnet.

Je nach herzustellendem Extrusionsprodukt 50 wird mit Drücken von z.B. 10 bis hin zu 1500 bar und Temperaturen von beispielsweise 60 bis 300 °C gearbeitet. Die Länge der Extruderschnecke 3 beträgt in der Regel das 25- bis 40-fache des Schneckendurchmessers. Die Extruderschnecke 3 kann als sogenannter Schnellläufer ausgebildet sein und wird mit Drehzahlen von bis zu 1500 Umdrehungen pro Minute betrieben. Die Schmelzepumpe 6 ist als Zahnradpumpe ausgebildet und wird mit Drehzahlen von z.B. bis zu 4000 U/min betrieben. Die Drehzahl $N_1$ der Extruderschnecke 3 kann je nach Produktherstellung (z.B. schnelle Extrusion mit hoher Drehzahl bei der Herstellung von Extrusionsprofilen mit einfacher Geometrie, bspw. Kantenbändern oder Schläuchen, langsame Extrusion mit niedriger Drehzahl bei der Herstellung komplexer Geometrien, wie z.B. Fensterprofilen mit einer Vielzahl von Hohlkammern) oder auch Rezeptur des zu verarbeitenden Kunststoffgranulats 4 unterschiedlich eingestellt sein, Gleiches gilt entsprechend für die Drehzahl $N_2$ der Schmelzepumpe 6.

Zur automatisierten Überwachung von Verschleiß- und/oder Verschmutzungserscheinungen werden in der Kunststoff-Extrusionsanlage 100 die Drehzahl $N_1$ der Extruderschnecke 3 und auch die Drehzahl $N_2$ der Schmelzepumpe 6 sowie der Kunststoffaustragsstrom in Form des Massenaustrags M an Kunststoff aus dem Extrusionswerkzeug 5 pro Zeiteinheit fortlaufend in regelmäßigen Zeitabständen gemessen. Mithilfe dieser Messwerte wird ein Quotient

$$Q = f\,(N,\,M)$$
$$= N_1 \times N_2\,/\,M$$

gebildet, in dessen Dividend folglich das Produkt aus Extruderschnecken-Drehzahl $N_1$ [1/min] und Schmelzepumpen-Drehzahl $N_2$ [1/min] und in dessen Divisor der Kunststoffaustragsstrom M [kg/min] einfließt. Alternativ ist es auch möglich, den Quotienten Q derart zu bilden, dass in dessen Dividend die Summe aus den beiden Drehzahlen $N_1$, $N_2$ eingeht:

$$Q = (\,N_1 + N_2\,)\,/\,M,$$

oder dass zur Bildung des Quotienten Q lediglich eine der beiden Drehzahlen N herangezogen wird, also

$$Q = N_1\,/\,M,$$

bzw.

$$Q = N_2\,/\,M.$$

Beispielsweise erfolgt in einem Zeitintervall z (z.B. eimal pro Minute) einmal gleichzeitig die Erfassung aller drei Messwerte $N_1$, $N_2$ und M und daraus die vorstehend erläuterte Quotientenbildung. Die somit pro Zeitintervall z einmal gebildeten Quotienten Q werden nun über einen bestimmten Zeitraum Z (z.B. 24 h) aufsummiert und diese Summe durch die Anzahl der Messungen dividiert, wodurch man einen über diesen Zeitraum Z gemittelten Quotienten Q'

$$Q' = \Sigma\,Q_i\,/\,A$$

erhält und der Wert A = Z / z der Anzahl der Messungen im Zeitraum Z entspricht. Sofern nun Q' den vordefinierten Grenzwert überschreitet, ist dies ein Indiz für einen einen zu hohen Verschleiß- und/oder Verschmutzungsgrad der Kunststoff-Extrusionsanlage 100 und es wird ein Alarm dahingehend ausgelöst, dass ein Anlagenservice (z.B. Reinigung und/oder Austausch bzw. Instandsetzung von Verschleißteilen) erforderlich ist. Auch wenn die Drehzahlen $N_1$, $N_2$ z.B. aufgrund der Verarbeitung unterschiedlicher Produkte, der Herstellung unterschiedlicher Geometrien mit unterschiedlichen Werkzeugen, Verfahrensoptimierungen etc. immer wieder anders eingestellt werden, kann durch die vorbeschriebene Quotientenbildung eine schleichende Verschlechterung der Anlagenperformance aufgrund von Verunreinigungen und/oder Verschleiß detektiert werden. Ggf. kann zusätzlich bei der Bildung der einzelnen Quotienten $Q_i$ noch ein Faktor berücksichtigt werden, der bei der Verarbeitung unterschiedlicher Rezepturen/Materialien deren unterschiedlichen Zähigkeiten Rechnung trägt.

Der als Indikator für einen zu hohen Verschleißgrad von z.B. Extruderschnecke 3 oder -gehäuse 1 dienende, vordefinierte Grenzwert wird mit Hilfe der Kunststoff-Extrusionsanlage 100 in einwandfreiem Zustand, also einer/m verschleiß- und verschmutzungsfreien Extruderschnecke 3, Extruderschneckengehäuse 1 und Schmelzepumpe 6 ermittelt. Um nun den Grenzwert zu erhalten, wird zu dem mit diesem Anlagenzustand ermittelten Quotienten dann ein Verschleiß-/Verschmutzungstoleranzzuschlag von z.B. 10 % hinzugerechnet. Zweckmäßigerweise wird der Alarm in einer (nicht dargestellten) Instandhaltungszentrale einer Fabrik mit mehreren Kunststoff-Extrusionsanlagen 100 ausgelöst.

Die Drehzahl $N_1$ der Extruderschnecke 3 und auch die Drehzahl $N_2$ der Schmelzepumpe 6 kann aus einer Reihe von gemittelten Drehzahl-Einzelmesswerten ermittelt werden, welche beispielsweise sekündlich erfasst werden. Auch durch diese Mittelung wird vermieden, dass kurzzeitige "Ausreißerwerte" nach unten oder oben, die betriebsbedingt nicht ausgeschlossen werden können, zu einer verfrühten Alarmauslösung führen. Zweckmäßigerweise erfolgt die Quotientenbildung $Q_i$, der Vergleich des zeitlich gemittelten Quotienten Q' mit dem vordefinierten Grenzwert sowie die Alarmauslösung mithilfe eines (nicht dargestellten) Computers, insbesondere eines Computer-Netzwerks, über das die Kunststoff-Extrusionsanlage 100 mit einer davon entfernten (nicht dargestellten) Einrichtung, bspw. der vorgenannten Instandhaltungszentrale verbunden ist.

Als zu extrudierendes Material 4 wird im Ausführungsbeispiel Polypropylen-Kunststoffgranulat eingesetzt. Andere Materialien wie z.B. Polyvinylchlorid (PVC), Polyethylen (PE), Polyamid (PA) oder Polymethylmethacrylat (PMMA) sind hierdurch jedoch nicht ausgeschlossen.

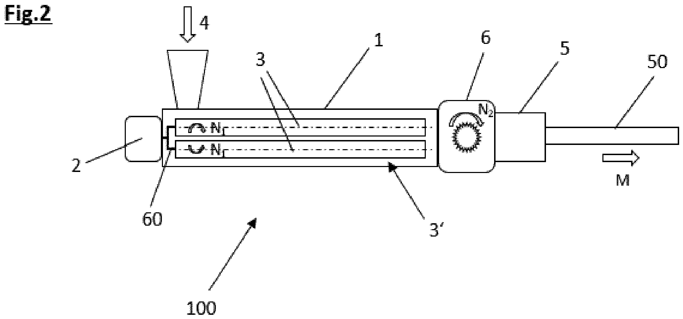

Im Ausführungsbeispiel gemäß Fig. 2 ist die Kunststoff-Extrusionsanlage 100 mit einer Doppelschnecke 3' ausgerüstet, d.h. es sind zwei in einem gemeinsamen Extruderschneckengehäuse 1 parallel zueinander angeordnete, zweckmäßigerweise ineinandergreifende Extruderschnecken 3 vorgesehen, die in der Regel wiederum über ein Getriebe 60 von einem gemeinsamen Motor 2 mit gleicher Drehzahl $N_1$ angetrieben werden. Das Gehäuse 1 weist in diesem Fall im Querschnitt gesehen eine entsprechend achtförmige Bohrung auf. Die Bildung der Quotienten $Q_i$ sowie Q' kann hier analog zu der für das Ausführungsbeispiel gemäß Fig. 1 beschriebenen Verfahrensweise erfolgen.

**Patentansprüche**

1. Verfahren zur Überwachung von Verschleiß- und/oder Verschmutzungserscheinungen in einer Kunststoff-Extrusionsanlage (100),

    - wobei die Kunststoff-Extrusionsanlage (100) ein Extruderschneckengehäuse (1), mindestens eine im Extruderschneckengehäuse (1) axial drehbar gelagerte und motorisch angetriebene Extruderschnecke (3) zum Aufschmelzen und Fördern von Kunststoffgranulat (4), mindestens ein stromab der Extruderschnecke (3) angeordnetes Extrusionswerkzeug (5) sowie optional mindestens eine Schmelzepumpe (6) zur Förderung von Kunststoffschmelze aufweist, **dadurch gekennzeichnet, dass** die Drehzahl ($N_1$) der Extruderschnecke (3) und/oder die Drehzahl ($N_2$) der Schmelzepumpe (6) sowie der Kunststoffaustragsstrom (M) aus dem Extrusionswerkzeug (1) fortlaufend gemessen werden, dass mithilfe der Messwerte ein Quotient (Q) gebildet wird, in dessen Dividend mindestens eine Drehzahl ($N_1$, $N_2$) und in dessen Divisor der Kunststoffaustragsstrom (M) einfließt, und dass bei ein- oder mehrfachem Überschreiten eines vordefinierten Grenzwertes für den Quotienten (Q) ein Alarm ausgelöst wird.

2. Verfahren nach Anspruch 1, **dadurch gekennzeichnet, dass** der Dividend des Quotienten (Q) als variable Größe lediglich die Drehzahl ($N_1$) der Extruderschnecke (3) oder die Drehzahl ($N_2$) der Schmelzepumpe (6) enthält.

3. Verfahren nach Anspruch 1, **dadurch gekennzeichnet, dass** in den Dividend des Quotienten (Q) sowohl die Drehzahl ($N_1$) der Extruderschnecke (3) als auch die Drehzahl ($N_2$) der Schmelzepumpe (6) einfließt.

4. Verfahren nach Anspruch 3, **dadurch gekennzeichnet, dass** der Dividend des Quotienten (Q) das Produkt oder die Summe aus Drehzahl ($N_1$) der Extruderschnecke (3) und Drehzahl ($N_2$) der Schmelzepumpe (6) enthält, insbesondere aus diesem besteht.

5. Verfahren nach einem der Ansprüche 1 bis 4, **dadurch gekennzeichnet, dass** der Kunststoffaustragsstrom (M) in Form des Massenaustrags an Kunststoff aus dem Extrusionswerkzeug (5) pro Zeiteinheit gemessen wird.

6. Verfahren nach einem der Ansprüche 1 bis 5, **dadurch gekennzeichnet, dass** die Schmelzepumpe (6) zwischen dem Extruderschneckengehäuse (1) und dem Extrusionswerkzeug (5) angeordnet wird.

7. Verfahren nach einem der Ansprüche 1 bis 6, **dadurch gekennzeichnet, dass** der vordefinierte Grenzwert mit Hilfe der/s verschleiß- und/oder verschmutzungsfreien Extruderschnecke (3) und/oder Extruderschneckengehäuses (1) und/oder Schmelzepumpe (6) ermittelt wird.

8. Verfahren nach einem der Ansprüche 1 bis 7, **dadurch gekennzeichnet, dass** der Alarm in einer Instandhaltungszentrale einer Fabrik mit mehreren Kunststoff-Extrusionsanlagen (100) ausgelöst wird.

9. Verfahren nach einem der Ansprüche 1 bis 8, **dadurch gekennzeichnet, dass** die Drehzahl ($N_1$, $N_2$) der Extruderschnecke (3) und/oder der Schmelzepumpe (6) aus einer Reihe von gemittelten Drehzahl-Einzelmesswerten ermittelt wird.

10. Verfahren nach einem der Ansprüche 1 bis 9, **dadurch gekennzeichnet, dass** die Quotientenbildung, der Vergleich des ermittelten Quotienten (Q) mit dem vordefinierten Grenzwert sowie die Alarmauslösung mithilfe eines Computers erfolgt.

**Fig.1**

**Fig.2**

Europäisches
Patentamt

European
Patent Office

Office européen
des brevets

# EUROPÄISCHER RECHERCHENBERICHT

Nummer der Anmeldung

EP 20 19 7991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/102238 A1 (FUJIFILM CORP [JP]; HASHIMOTO KIYOKAZU [JP]; YAMADA AKIRA [JP]) 2. August 2012 (2012-08-02) | 1,2,5-10 | INV. B29C48/92 B29C48/37 |
| Y | * Ansprüche 1-17 * * Tabellen 1-5 * * Abbildungen 1-2 * ----- | 3,4 | B29C48/375 ADD. |
| X | US 5 695 789 A (HARRIS HOLTON E [US]) 9. Dezember 1997 (1997-12-09) * Spalte 8, Zeilen 48-59 * * Abbildungen 1,7 * ----- | 1,2,5,6, 10 | B29B7/42 B29B7/72 |
| Y | DE 10 2018 102738 A1 (KRAUSSMAFFEI BERSTORFF GMBH [DE]) 8. August 2019 (2019-08-08) * Absatz [0030] * * Absatz [0052] - Absatz [0059] * * Ansprüche 1-14 * * Abbildungen 1-3 * ----- | 1-10 | |
| Y | EP 2 778 420 A1 (TOYO TIRE & RUBBER CO [JP]) 17. September 2014 (2014-09-17) * Absatz [0010] - Absatz [0012] * * Ansprüche 1-5 * * Abbildung 1 * ----- | 1-10 | RECHERCHIERTE SACHGEBIETE (IPC) B29C B29B |
| Y | DE 103 54 273 A1 (BATTENFELD EXTRUSIONSTECH [DE]) 23. September 2004 (2004-09-23) * Abbildungen 1-2 * ----- | 1-10 | |
| X | US 4 613 471 A (HARRIS HOLTON E [US]) 23. September 1986 (1986-09-23) * Abbildung 1 * ----- | 1,2,5,6 | |

-/--

Der vorliegende Recherchenbericht wurde für alle Patentansprüche erstellt

| Recherchenort | Abschlußdatum der Recherche | Prüfer |
|---|---|---|
| München | 12. Februar 2021 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

EP 20 19 7991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2004/032040 A1 (HARRIS HOLTON E [US]) 19. Februar 2004 (2004-02-19) * Ansprüche 1-21 * * Abbildung 1 * ----- | 1-10 | |
| A | US 3 704 972 A (KNELLER KLAUS ET AL) 5. Dezember 1972 (1972-12-05) * Spalte 3, Zeilen 35-60 * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 12. Februar 2021 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 7991

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2021

| Im Recherchenbericht angeführtes Patentdokument | Datum der Veröffentlichung | Mitglied(er) der Patentfamilie | Datum der Veröffentlichung |
|---|---|---|---|
| WO 2012102238 A1 | 02-08-2012 | JP 5759908 B2<br>JP 2012166547 A<br>WO 2012102238 A1 | 05-08-2015<br>06-09-2012<br>02-08-2012 |
| US 5695789 A | 09-12-1997 | KEINE | |
| DE 102018102738 A1 | 08-08-2019 | CN 111670103 A<br>DE 102018102738 A1<br>EP 3749501 A1<br>TW 201934307 A<br>US 2020361131 A1<br>WO 2019154631 A1 | 15-09-2020<br>08-08-2019<br>16-12-2020<br>01-09-2019<br>19-11-2020<br>15-08-2019 |
| EP 2778420 A1 | 17-09-2014 | CN 104047845 A<br>EP 2778420 A1<br>JP 5607197 B2<br>JP 2014172318 A<br>US 2014255531 A1 | 17-09-2014<br>17-09-2014<br>15-10-2014<br>22-09-2014<br>11-09-2014 |
| DE 10354273 A1 | 23-09-2004 | KEINE | |
| US 4613471 A | 23-09-1986 | KEINE | |
| US 2004032040 A1 | 19-02-2004 | KEINE | |
| US 3704972 A | 05-12-1972 | CH 523138 A<br>DE 2123018 A1<br>US 3704972 A | 31-05-1972<br>18-11-1971<br>05-12-1972 |

EPO FORM P0461

Für nähere Einzelheiten zu diesem Anhang : siehe Amtsblatt des Europäischen Patentamts, Nr.12/82